# EUROPEAN PATENT APPLICATION

(11) **EP 2 946 747 A1**
(43) Date of publication of application: **25.11.2015**
(21) Application number: 14868150.5
(22) Date of filing: 20.08.2014
(51) Int. Cl.: A61C 11/02, A61C 13/36, A61C 19/05

(54) **TOOTH MODEL ARTICULATOR**

(30) Priority: 04.12.2013 KR 20130149649
(71) Applicant: Robots And Design Co. Ltd., Seongnam-si, Gyeonggi-do 463-760 (KR)
(72) Inventor: BEOM, Hee Rak, Seoul 137-818 (KR); JUNG, Ji Young, Seoul 138-740 (KR); KIM, Jin Oh, Seoul 137-030 (KR); CHO, Daniel Hyunjae, Seoul 153-798 (KR)
(74) Representative: Kuhnen & Wacker
(86) International application number: PCT/KR2014/007721
(87) International publication number: WO 2015/083921

(57) **Abstract**

Disclosed herein is a dental model articulator. The dental model articulator includes: a pair of base members (3) to which dental models (2) are fastened; and an upper fastening means (5) and a lower fastening means (6) to which the respective base members are removably fastened, and which are rotatably coupled to each other by a rotating shaft. A fastening hole (8) is formed through the end of each of the base members. An insert rod (9) is provided on each of the upper fastening means and the lower fastening means and is fitted into the fastening hole of the corresponding base member. Each of the upper fastening means and the lower fastening means includes an auxiliary fastening means (10) for pushing the corresponding base member so that pressure is applied to the base member toward the insert rod, thus increasing a base member fastening force.

## Description

### Technical Field

The present invention generally relates to dental model articulators to which a dental model for an upper jaw (upper teeth) and a dental model for a lower jaw (lower teeth) are coupled. More particularly, the present invention relates to a dental model articulator configured such that dental models are easily and stably coupled thereto, and movement of the coupled dental models is reliably simulated, whereby the quality of the simulation result can be enhanced.

### Background Art

Generally, improper dental care causes penetration of bacteria into teeth, thus inducing tooth decay, gum disease or the like. In this case, there is need for removal of a decayed tooth if the degree of decay is severe. Alternatively, there is need for treating the decayed portion of the tooth and restoring the tooth such that normal adjacent teeth or a substitute tooth can be prevented from being influenced by the decayed portion of the tooth. For this, an artificial tooth may be implanted, or a dental prosthesis while maintaining existing teeth may be used.

In detail, to replace a decayed tooth with an artificial tooth or use a dental prosthesis, a dental impression mold for the teeth of a patient is manufactured in a dental hospital and then sent to a dental technical laboratory. In the dental technical laboratory, dental cement is injected into the dental impression mold, thus forming a dental model. Depending on the number of teeth to be treated or associated with the dental prosthesis, dental models are classified into a partial dental model for only an associated tooth to be treated, a one-side dental model, or an entire-side dental model. Furthermore, in consideration of relationship between teeth, a dental model for teeth to be treated, or a dental model for antagonistic teeth corresponding to the teeth to be treated is manufactured.

After the dental model for teeth to be treated and the dental model for antagonistic teeth have been manufactured, the relationship between teeth must be determined so as to manufacture a dental prosthesis and artificial teeth that match the occlusion and masticating structure of the patient. For this, the structure of the upper and lower jaws of the patient must be simulated, whereby the optimum dental prosthesis and artificial teeth can be manufactured. A dental model articulator is a device provided to simulate the structure of the upper and lower jaws corresponding to the dental structure of the patient.

A representative example of such dental model articulator was proposed in US Patent No. 8, 382, 474 (title: Dental Articulator). As disclosed in the gazette, the dental articulator includes a base member to which dental models are fastened, a bracket that fixes the base member in place, and a first arm and a second arm that fix the bracket in place and are rotatably coupled to each other by a rotating shaft.

That is, after dental models are coupled to the base member, the dental models can be rotated relative to each other by the first and second arms that are rotated around the rotating shaft. In this ways, the structure of the upper and lower jaws can be simulated.

### Disclosure

### Technical Problem

However, the above-mentioned conventional dental model articulators are problematic in that the base members to which the dental models are attached cannot be stably maintained at correct positions because simple fitting coupling is used to fix the base members in place, whereby when movement of the dental models is simulated, the base members may be undesirably removed from the correct positions.

Furthermore, because movement of the dental models for upper and lower jaws is simulated in such a way that the dental models are rotated only upward and downward around the shaft, various movements of the dental models cannot be simulated. Therefore, high-quality simulation results cannot be obtained.

Accordingly, the present invention has been made keeping in mind the above problems occurring in the prior art, and an object of the present invention is to provide a dental model articulator configured such that dental models are easily and stably coupled thereto, and movement of the coupled dental models is reliably simulated, whereby the quality of the simulation result can be enhanced.

### Technical Solution

In order to accomplish the above object, in an aspect, the present invention provides a dental model articulator, including: a pair of base members configured such that dental models for upper and lower jaws are respectively fastened thereto; and an upper fastening means and a lower fastening means to which proximal ends of the respective base members are removably fastened. The upper fastening means and the lower fastening means are coupled to each other by a rotating shaft so as to be rotatable relative to each other. A fastening hole is formed through the proximal end of each of the base members. An insert rod is provided on each of the upper fastening means and the lower fastening means. The insert rod is fitted into and fastened to the fastening hole formed in the proximal end of the corresponding base member. Each of the upper fastening means and the lower fastening means includes: an auxiliary fastening means for pushing a surface of the proximal end of the corresponding base member so that pressure is applied to the base member toward the insert rod, thus increasing a base member fastening force.

The auxiliary fastening means may include: a pressing protrusion disposed perpendicular to the insert rod such that the pressing protrusion faces the surface of the proximal end of the base member, the pressing protrusion being elastically supported by a spring; and a housing receiving the spring therein and guiding the pressing protrusion such that the pressing protrusion reciprocates back and forth.

The auxiliary fastening means may include: an elastic pressing member configured such that a portion thereof oriented in a direction perpendicular to the insert rod is disposed corresponding to the surface of the proximal end of the associated base member, the elastic pressing member elastically pressing the base member in the direction perpendicular to the insert rod.

In another aspect, the present invention provides a dental model articulator, including: a pair of base members configured such that dental models for upper and lower jaws are respectively fastened thereto; and an upper fastening means and a lower fastening means to which proximal ends of the respective base members are removably fastened. The upper fastening means and the lower fastening means are coupled to each other by a rotating shaft so as to be rotatable relative to each other. The upper fastening means includes: a fastening member to which the corresponding base member is fastened; a rotating member to which an end of the fastening member is fastened, the rotating member being rotatably coupled to the lower fastening means by the rotating shaft; and a reciprocating means provided between the fastening member and the rotating member, the reciprocating means supporting and guiding the fastening member such that the fastening member reciprocates toward and away from the rotating member.

The reciprocating means may include: a guide rod fastened to the end of the fastening member in a direction parallel to the base member; and a guide hole formed in the rotating member and receiving the guide rod therein so that the guide rod is guided in the guide hole by the rotating member.

In a further aspect, the present invention provides a dental model articulator, including: a pair of base members configured such that dental models for upper and lower jaws are respectively fastened thereto; and an upper fastening means and a lower fastening means to which proximal ends of the respective base members are removably fastened. The upper fastening means and the lower fastening means are coupled to each other by a rotating shaft so as to be rotatable relative to each other. The lower fastening means includes a distance adjustment means for adjusting a distance between the upper fastening means and the lower fastening means when the upper fastening means and the lower fastening means rotate relative to each other.

The distance adjustment means may include: a distance adjustment member protruding from a surface of the lower fastening means that faces the upper fastening means and provided so as to be rotatable, the distance adjustment member including contact surfaces facing the upper fastening means and arranged around a rotating center such that the contact surfaces are stepped to have different heights and each contact surface has a predetermined center angle on the rotating center; and a spacing rod protruding from a surface of the upper fastening means that faces the lower fastening means, the spacing rod configured to make contact with the contact surfaces.

The distance adjustment means may include: a distance adjustment rod protruding from a surface of the upper fastening means that faces the lower fastening means such that the distance adjustment rod makes contact with the lower fastening means, the distance adjustment rod being adjustable in length of a portion thereof protruding from the surface of the upper fastening means.

The distance adjustment rod may have an external thread that is threaded into the upper fastening means

The distance adjustment means may include: a rotor rotatably coupled to a surface of the lower fastening means that faces the upper fastening means, the rotor including, on a portion of an outer circumferential surface thereof, a plurality of contact parts having different radii (R) and (r) on a center axis of the rotor; and a rotor-corresponding means provided in a portion of the upper fastening means that faces the lower fastening means at a position at which the rotor-corresponding means makes contact with the contact parts of the rotor, wherein when the upper fastening means is rotated around the rotating shaft, the rotor-corresponding means comes into contact with one of the contact parts so as to control the distance between the upper fastening means and the lower fastening means.

The contact part may have a polygonal shape configured such that the contact parts are formed on the outer circumferential surface of the rotor and form a plurality of vertices spaced apart from the center axis of the rotor by different distances.

The rotor may be a rod-shaped rotating body rotatably provided in a rotating shaft hole that is formed in the lower fastening means below the rotating shaft, the rotor having on a first end thereof a knob that can be manipulated by a user. A circular depression may be formed in the rotor between the knob and the contact parts, wherein an end of a pin is inserted into the circular depression so that the rotor can be prevented from being undesirably removed from the rotating shaft hole.

The rotor-corresponding means may include a receiving depression formed in a portion of the upper fastening means that is disposed below the rotating shaft. The receiving depression may be provided to receive any one of the contact parts therein.

In yet another aspect, the present invention provides a dental model articulator, including: a pair of base members configured such that dental models for upper and lower jaws are respectively fastened thereto; and an upper fastening means and a lower fastening means to which proximal ends of the respective base members are removably fastened. The upper fastening means and the lower fastening means are coupled to each other by a rotating shaft so as to be rotatable relative to each other. The lower fastening means includes: a lower body to which the corresponding base member is fastened; and a rotating body rotatably coupled to the lower body by a shaft and rotatably coupled to the upper fastening means by the rotating shaft. A rotating means is provided between the lower body and the rotating body and controls the rotating body such that the rotating body rotates around an axis thereof in a lateral direction relative to the base member by a predetermined angle.

The rotating means may include a pushing member engaging with a fastening shaft that is provided in the rotating body and is rotatably coupled to the lower body. The pushing member may move perpendicular to the fastening shaft and thus rotate the fastening shaft.

Pinion gear teeth may be formed around an outer circumferential surface of the fastening shaft and engage with a rack gear provided on the pushing member. The pushing member may be guided in the lower body and provided so as to be returnable to an original position thereof.

In still another aspect, the present invention provides a dental model articulator, including: a pair of base members configured such that dental models for upper and lower jaws are respectively fastened thereto; and an upper fastening means and a lower fastening means to which proximal ends of the respective base members are removably fastened, the upper fastening means and the lower fastening means being coupled to each other by a rotating shaft so as to be rotatable relative to each other. A fastening hole is formed through the proximal end of each of the base members. An insert rod is provided on each of the upper fastening means and the lower fastening means. The insert rod is fitted into and fastened to the fastening hole formed in the proximal end of the corresponding base member. The insert rod is disposed at a position at which, when the base member is fastened to a corresponding one of the upper fastening means and the lower fastening means, the insert rod is fitted into a surface of the base member on which the associated dental model is provided.

### Advantageous Effects

In a dental model articulator according to the present invention, base members to which dental models are fastened can be easily and stably mounted to an upper fastening means and a lower fastening means by insert rods and an auxiliary fastening means. Various movements of the dental models can be embodied by a reciprocating means, a distance adjustment means, and a rotating means, whereby high-quality data can be obtained.

### Description of Drawings

Fig. 1 is a perspective view illustrating a dental model articulator according to an embodiment of the present invention;
Figs. 2 and 3 are perspective views showing the usage of the dental model articulator according to the embodiment of the present invention;

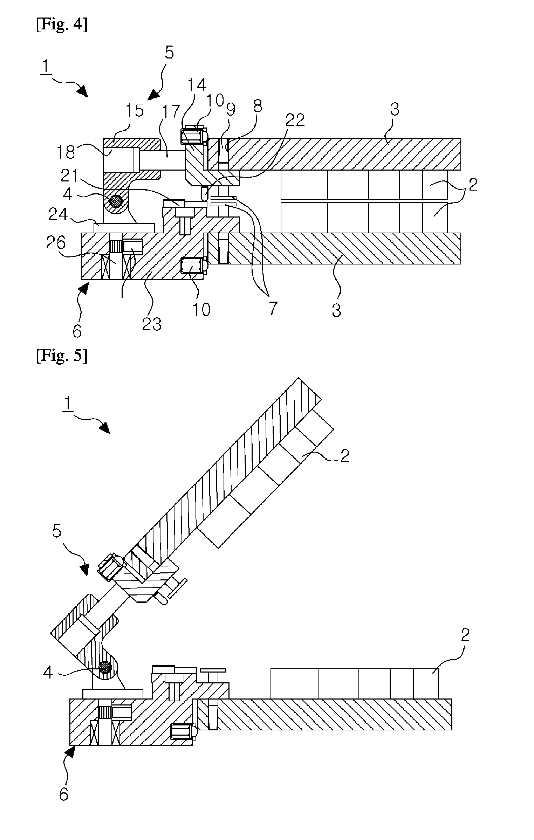

Figs. 4 and 5 are sectional views showing the usage of the dental model articulator according to the embodiment of the present invention;
Fig. 6 is an enlarged sectional view showing an auxiliary fastening means of the dental model articulator according to the embodiment of the present invention;
Fig. 7 is a perspective view illustrating the usage of an insert rod of the dental model articulator according to the embodiment of the present invention;
Fig. 8 is a perspective view showing a reciprocating means of the dental model articulator according to the embodiment of the present invention;
Figs. 9 and 10 are views illustrating the usage of the reciprocating means of the dental model articulator according to the embodiment of the present invention;
Figs. 11 through 13 are views illustrating the usage of a distance adjustment means of the dental model articulator according to the embodiment of the present invention;
Fig. 14 is a sectional view showing a rotating means of the dental model articulator according to the embodiment of the present invention;
Figs. 15 and 16 are views illustrating the usage of the rotating means of the dental model articulator according to the embodiment of the present invention;
Figs. 17 through 23 are views illustrating a dental model articulator according to another embodiment of the present invention; and
Figs. 24 through 26 are views illustrating a dental model articulator according to a further embodiment of the present invention.

### Best Mode

Hereinafter, a dental model articulator according to a preferred embodiment of the present invention will be described in detail with reference to the attached drawings.

The embodiment of the present invention can be changed in various ways, and the bounds of the present invention are not limited to the embodiment, which will be described in detail herein below. Furthermore, the embodiment of the present invention aims to help those with ordinary knowledge in this art more clearly understand the present invention. Therefore, the shape, etc. of each element may be exaggeratedly expressed in the drawings for the sake of understanding the present invention. Reference now should be made to the drawings, in which the same reference numerals are used throughout the different drawings to designate the same or similar components. Furthermore, detailed descriptions of known functions and elements that may unnecessarily make the gist of the present invention obscure will be omitted.

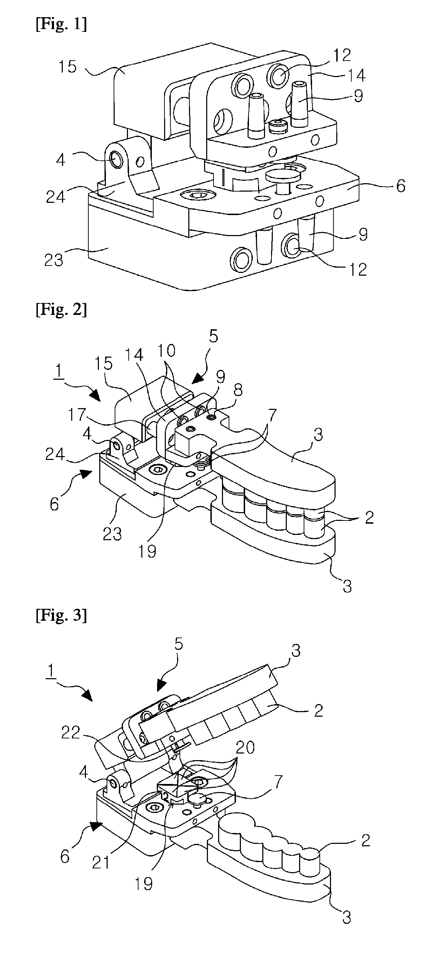

Fig. 1 is a perspective view illustrating a dental model articulator according to an embodiment of the present invention. The dental model articulator 1 according to the embodiment of the present invention includes a pair of base members 3 configured such that dental models 2 for upper and lower jaws are respectively fastened thereto, and an upper fastening means 5 and a lower fastening means 6 to which proximal ends of the respective base members 3 are removably fastened, and that are coupled to each other by a rotating shaft 4 so as to be rotatable relative to each other.

That is, as the upper fastening means 5 and the lower fastening means 6 are rotated relative to each other around the shaft, the dental models 2 are rotated toward or away from each other around the rotating shaft 4. In this way, movement of the dental models 2 is embodied, and simulation data is obtained.

Each base member 3 is configured such that the corresponding dental model 2 is fastened to a surface of the base member 3, and a fastening element that is fastened to the upper fastening means 5 or the lower fastening means 6 is provided on the proximal end of the base member 3. The base members 3 are preferably manufactured by the conventional well known technique.

Preferably, stoppers 7 are respectively provided on surfaces of the upper and lower fastening means 5 and 6 that face each other at positions at which the stoppers 7 make contact with each other, thus preventing the upper and lower fastening means 5 and 6 from excessively approaching each other when they rotate around the shaft.

In the dental model articulator according to this embodiment, fastening holes 8 are formed through the proximal end of each base member 3. Insert rods 9 are provided on each of the upper fastening means 5 and the lower fastening means 6 and fitted into the corresponding fastening holes 8 formed in the proximal end of each base member 3.

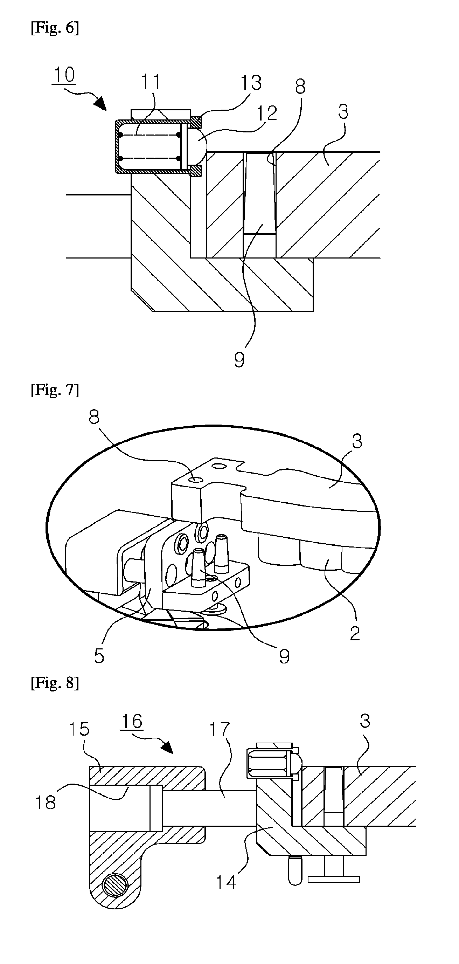

That is, fastening elements provided on the base members 3 include the fastening holes 8. As shown in Fig. 7, the insert rods 9 are fitted into the respective fastening holes 8, whereby the base members 3 are primarily fastened to the upper fastening means 5 and the lower fastening means 6.

Preferably, the diameter of an outer circumferential surface of each insert rod 9 corresponds to the inner diameter of the associated fastening hole 8. More preferably, each insert rod 9 is tapered in such a way that the diameter thereof is reduced from a proximal end thereof to a distal end.

Thereby, the insert rods 9 can be easily fitted into the respective fastening holes 8 and reliably fastened thereto.

In a dental model articulator 1 according to this embodiment, each of the upper fastening means 5 and the lower fastening means 6 includes an auxiliary fastening means 10 that pushes a surface of the proximal end of the corresponding base member 3 such that pressure is applied to the base member 3 toward the insert rod 9, thus increasing the base member fastening force.

That is, the upper fastening means 5 and the lower fastening means 6 use the fastening holes 8 and the insert rods 9 to provide vertical fastening force to the base members 3. Simultaneously, the auxiliary fastening means 10 also provides horizontal fastening force to the base members 3. Thereby, the base members 3 can be stably maintained in the fastened state without being undesirably removed from the fastening means.

As shown in Fig. 6, each auxiliary fastening means 10 includes a pressing protrusion 12 that is elastically supported by a spring 11 and is disposed perpendicular to the insert rod 9 such that the pressing protrusion 12 faces the surface of the proximal end of the base member 3, and a housing 13 that houses the spring 11 therein and guides the pressing protrusion 12 such that the pressing protrusion 12 can move back and forth.

That is, the pressing protrusions 12 press the surface of the distal end of the base member 3 and thus apply additional fastening force to the base member. When each base member 3 is coupled to the fastening means by the insert rods 9, the proximal end of the base member 3 pushes the pressing protrusions 12 until the insert rods 9 are aligned with the respective fastening holes 8, and then the insert rods 9 are fitted into the fastening holes 8. The pressing protrusions 12 press the base member 3 in the longitudinal direction of the base member 3 by means of elastic force of the spring 11.

Therefore, the base member 3 obtains the vertical fastening force by means of the insert rods 9 and obtains the horizontal fastening force by means of the pressing protrusions 12, whereby the base member 3 can be prevented from being undesirably removed from the fastening means.

In the dental model articulator 1 according to this embodiment, the upper fastening means 5 includes: a fastening member 14 to which the corresponding base member 3 is fastened; a rotating member 15 to which an end of the fastening member 14 is fastened, and that is rotatably coupled to the lower fastening means 6 by the rotating shaft 4; and a reciprocating means 16 that is provided between the fastening member 14 and the rotating member 15 and supports and guides the fastening member 14 such that the fastening member 14 reciprocates toward and away from the rotating member 15.

That is, the reciprocating means 16 moves the fastening member 14 back and forth relative to the rotating member 15. Therefore, the present invention can embody not only basic rotating motion of the dental models around the shaft but also the front-rear movement of the dental models relative to each other.

As shown in Figs. 8 through 10, the reciprocating means 16 includes a guide rod 17 that is fastened to the end of the fastening member 14 in a direction parallel to the base member 3, and a guide hole 18 that is formed in the rotating member 15 and receives the guide rod 17 therein such that the guide rod 17 is guided in the guide hole 18 by the rotating member 15.

That is, as the guide rod 17 moves back and forth along the guide hole 18, the front-rear movement of the dental models relative to each other is embodied.

In the dental model articulator 1 according to this embodiment, the lower fastening means 6 includes a distance adjustment means 19 that adjusts the distance between the upper and lower fastening means 5 and 6 when the upper fastening means 5 rotates relative to the lower fastening means 6.

In detail, the distance between the surfaces of the upper and lower fastening means 5 and 6 that face each other can be minutely adjusted by the distance adjustment means 19, whereby more precise simulation data can be obtained.

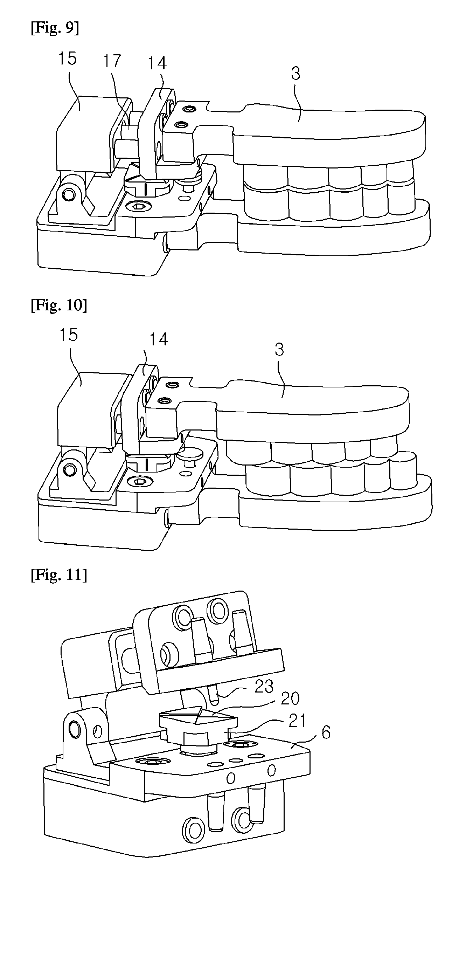

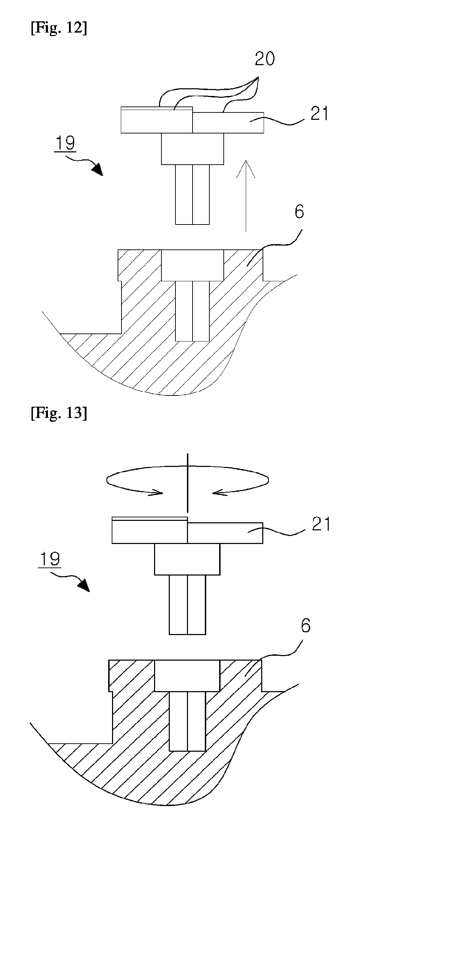

As shown in Figs. 11 through 13, the distance adjustment means 19 includes a distance adjustment member 21 and a spacing rod 22. The distance adjustment member 21 is configured such that it protrudes from the surface of the lower fastening means 6 that faces the upper fastening means 5 and is rotatably provided. Furthermore, the distance adjustment member 21 includes contact surfaces 20 that face the upper fastening means 5 and are arranged around a rotating center such that the contact surfaces 20 are stepped to have different heights and each has a predetermined center angle on the rotating center. The spacing rod 22 protrudes from a surface of the upper fastening means 5 that faces the lower fastening means 6. The spacing rod 22 is configured to make contact with the contact surfaces 20.

That is, a desired one of the contact surfaces 20 to be brought into contact with the spacing rod 22 is selected, and then the selected contact surface 20 is positioned at a position at which it makes contact with the spacing rod 22, whereby the distance between the upper and lower fastening means when rotating relative to each other can be finely adjusted.

Preferably, four contact surfaces 20 are provided, but the present invention is not limited to this. A support shaft is provided under the contact surfaces 20 and is inserted into the lower fastening means 6. The outer circumferential surface of the support shaft has a polygonal shape corresponding to the contact surfaces 20, thus preventing the contact surfaces 20 from undesirably rotating. Thereby, the selected one of the contact surfaces 20 can be prevented from being undesirably changed to another one.

In the dental model articulator 1 according to this embodiment, the lower fastening means 6 includes a lower body 23 to which the corresponding base member 3 is fastened; and a rotating body 24 that is rotatably coupled to the lower body 23 by a shaft, and to which the upper fastening means 5 is rotatably coupled by the rotating shaft 4. A rotating means 25 is provided between the lower body 23 and the rotating body 24 and controls the rotating body 24 such that the rotating body 24 rotates around an axis thereof in a lateral direction relative to the base member 3 by a predetermined angle.

Therefore, simulation of the lateral movement of the dental models 2 can be embodied by the rotating means 25.

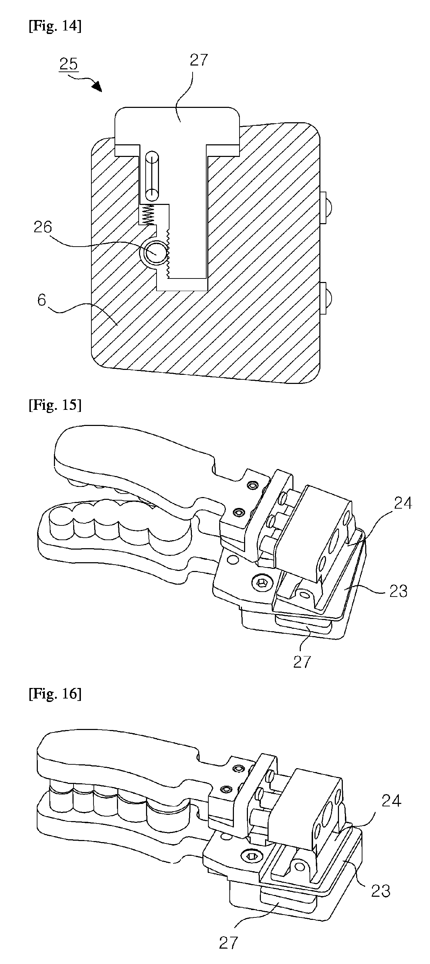

As shown in Figs. 14 through 16, the rotating means 25 includes a pushing member 27 that engages with a fastening shaft 26 that is provided in the rotating body 24 and is rotatably coupled to the lower body 23. The pushing member 27 moves perpendicular to the fastening shaft 26 and thus rotates the fastening shaft 26.

That is, when a user pushes the pushing member 27, the fastening shaft 26 is rotated by the movement of pushing member 27. Thus, the rotating body 24 is rotated on the lower body 23, whereby the lateral rotating movement of the corresponding dental model 2 can be embodied.

Furthermore, pinion gear teeth are formed around an outer circumferential surface of the fastening shaft 26 and engage with a rack gear provided on the pushing member 27. The pushing member 27 is preferably configured such that it is guided in the lower body 23 and provided so as to be returnable to its original position. However, the configuration of the pushing member 27 is not limited to this.

To conduct a simulation operation using the dental model articulator 1 according to this embodiment having the above-mentioned construction, the dental models 2 are fastened to the respective base members 3, and then the insert rods 9 are fitted into the respective fastening holes 8 formed in the proximal ends of the base members 3.

Here, fitting the insert rods 9 into the respective fastening holes 8 is conducted while the pressing protrusions 12 are pushed by the surfaces of the proximal ends of the base members 3.

As such, after the base members 3 are fastened to the upper fastening means 5 and the lower fastening means 6, the user rotates the distance adjustment member 21 of the distance adjustment means 19 to position one of the contact surfaces 20 having a desired height at a position at which the selected contact surface 20 makes contact with the spacing rod 22.

After the distance adjustment using the distance adjustment means 19 has been completed, simulation movement of the dental models 2 can be conducted. In other words, the upper fastening means 5 and the lower fastening means 6 can be rotated relative to each other around the rotating shaft 4.

Here, the simulation is conducted after a radius of rotation of the upper fastening means 5 and the lower fastening means 6 has been finely adjusted by the distance adjustment means 19, whereby precise data can be obtained.

Furthermore, depending on the depth to which the user pushes the pushing member 27, the direction and angle at which the rotating body 24 is rotated relative to the lower body 23 are determined. In this way, the lateral rotation of the dental models 2 can be simulated, and related data can be obtained.

In addition, the fastening member 14 can be moved back and forth relative to the rotating member 15, whereby the front-back movement of the dental models 2 can be simulated, and relative data can be obtained.

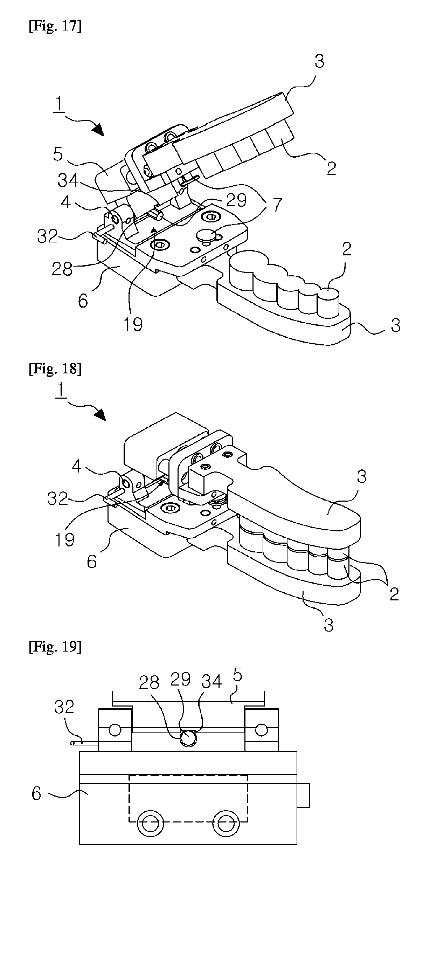

Figs. 17 through 23 are views illustrating a dental model articulator according to another embodiment of the present invention. As shown in Figs. 17 and 18, in the dental model articulator 1 according to this embodiment, a distance adjustment means 19 includes a rotor 29 and a rotor-corresponding means. The rotor 29 is rotatably coupled to a surface of the lower fastening means 6 that faces the upper fastening means 5. The rotor 29 includes, on a portion of the outer circumferential surface thereof, a plurality of contact parts 28 having different radii R and r on the center axis of the rotor 29. The rotor-corresponding means is provided in a portion of the upper fastening means 5 that faces the lower fastening means 6 at a position at which it makes contact with the contact parts 28 of the rotor 29. When the upper fastening means 5 is rotated around the rotating shaft 4, the rotor-corresponding means comes into contact with the contact part 28 so as to control the distance between the upper fastening means 5 and the lower fastening means 6.

That is, a desired one of the contact parts 28 to be brought into contact with the rotor-corresponding means is selected, and then the selected contact part 28 is positioned so that it makes contact with the rotor-corresponding means, whereby the distance between the upper and lower fastening means when rotating relative to each other can be finely adjusted.

In this embodiment, it is preferable that two through ten contact parts 28 are provided. Most preferably, eight contact parts 28 are provided.

Particularly, the rotor 29 preferably has a polygonal shape configured such that the contact parts 28 are formed on the outer circumferential surface of the rotor 29 and form a plurality of vertices spaced apart from the center axis of the rotor 29 by different distances. Most preferably, the contact parts 28 form an octagonal shape.

Therefore, while the simulation is conducted, the minimum allowable distance between the upper fastening means 5 and the lower fastening means 6 can be finely controlled by adjusting the positions of the contact parts 28 making contact with the rotor-corresponding means.

In the dental model articulator 1 according to this embodiment of the present invention having the above-mentioned construction, the rotor 29 is a rod-shaped rotating body that is rotatably provided in a rotating shaft hole 30 that is formed in the lower fastening means 6 below the rotating shaft 4. The rotor 29 has on a first end thereof a knob 31 that can be manipulated by hand. The contact parts 28 are provided on a second end of the rotor 29. A circular depression 33 is formed in the rotor 29 between the knob 31 and the contact parts 28, wherein an end of a pin 32 is inserted into the circular depression 33 so that the rotor 29 can be prevented from being undesirably removed from the rotating shaft hole 30.

That is, when the pin 32 is inserted into the circular depression 33 after the rotor 29 is rotatably provided in the rotating shaft hole 30, the rotor 29 can be retained in the rotating shaft hole 30 without being undesirably removed therefrom.

When desired to remove the rotor 29 from the rotating shaft hole 30, the pin 32 is removed from the circular depression 33, and the rotor 29 is thereafter removed from the circular depression 33.

In the dental model articulator 1 according to this embodiment of the present invention having the above-mentioned construction, the rotor-corresponding means preferably includes a receiving depression 34 that has a concave shape to receive the contact part 28 therein and is formed in a portion of the upper fastening means 5 that is disposed below the rotating shaft 4.

That is, the contact parts 28 are disposed in the receiving depression 34 and are brought into contact with the upper fastening means. As such, the contact parts 28 can be more reliably retained at the correct position thereof by the receiving depression 34, whereby the contact parts 28 can be prevented from being undesirably laterally moved.

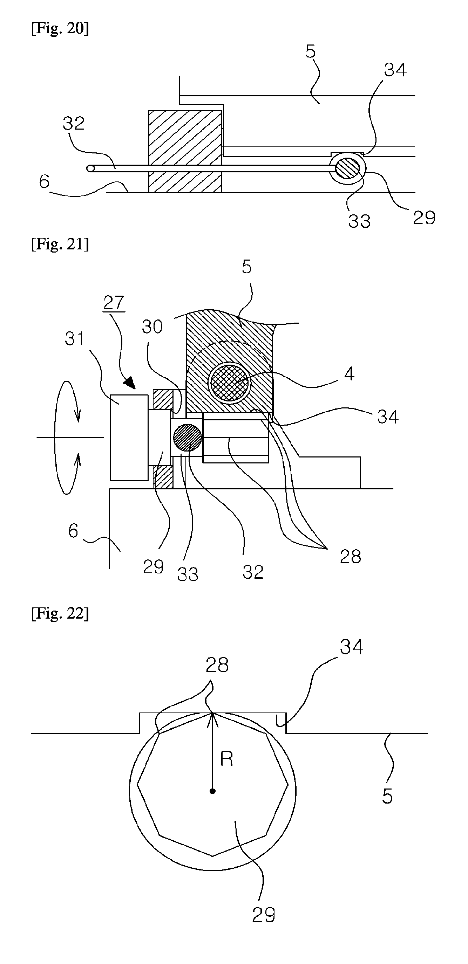

To conduct a simulation operation using the dental model articulator 1 according to this embodiment, the dental models 2 are fastened to the respective base members 3, and the proximal ends of the base members 3 are fastened to the upper fastening means 5 and the lower fastening means 6. Thereafter, as shown in Figs. 21 through 23, the rotor 29 of the distance adjustment means 19 is rotated such that one of the contact parts 28 that has a desired height is disposed at a position at which it makes contact with the receiving depression 34.

Here, the user can manually adjust the knob 31 protruding to the outside to rotate the rotor.

After the distance adjustment using the distance adjustment means 19 has been completed, movement of the dental models 2 can be simulated. In other words, the upper fastening means 5 and the lower fastening means 6 can be rotated relative to each other around the rotating shaft 4.

Here, the simulation is conducted after a radius of rotation of the upper fastening means 5 and the lower fastening means 6 has been finely adjusted by the distance adjustment means 8, whereby precise data can be obtained.

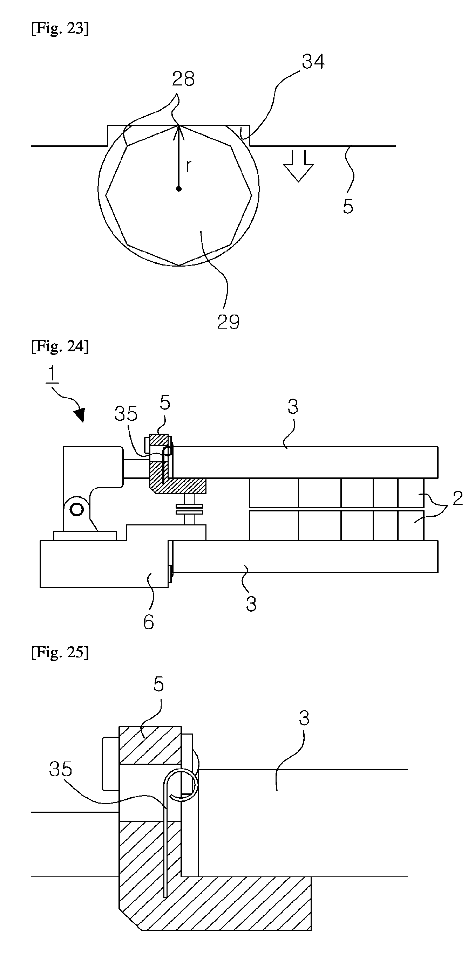

Fig. 24 is a view illustrating a dental model articulator according to a further embodiment of the present invention. In the dental model articulator 1 according to this embodiment, the auxiliary fastening means 10 includes an elastic pressing member 35 configured such that a portion thereof oriented in a direction perpendicular to the insert rod 9 is disposed corresponding to the surface of the proximal end of the associated base member 3, whereby the elastic pressing member 35 elastically pushes the base member 3 in the direction perpendicular to the insert rod 9.

As shown in Fig. 25, the elastic pressing member 35 preferably comprises a plate spring provided in the upper fastening means 5 but is not limited to this.

The elastic pressing member 35 presses the surface of the proximal end of the base member 3 and applies additional fastening force to the base member 3. When the base member 3 is coupled to the fastening means by the insert rods 9, the proximal end of the base member 3 pushes the end of the elastic pressing member 35 until the insert rods 9 are aligned with the respective fastening holes 8, and then the insert rods 9 are fitted into the fastening holes 8. The elastic pressing member 35 press the base member 3 in the longitudinal direction of the base member 3 by means of elastic force thereof.

Therefore, the base member 3 obtains the vertical fastening force by means of the insert rods 9 and obtains the horizontal fastening force by means of the elastic pressing member 35, whereby the base member 3 can be prevented from being undesirably removed from the fastening means.

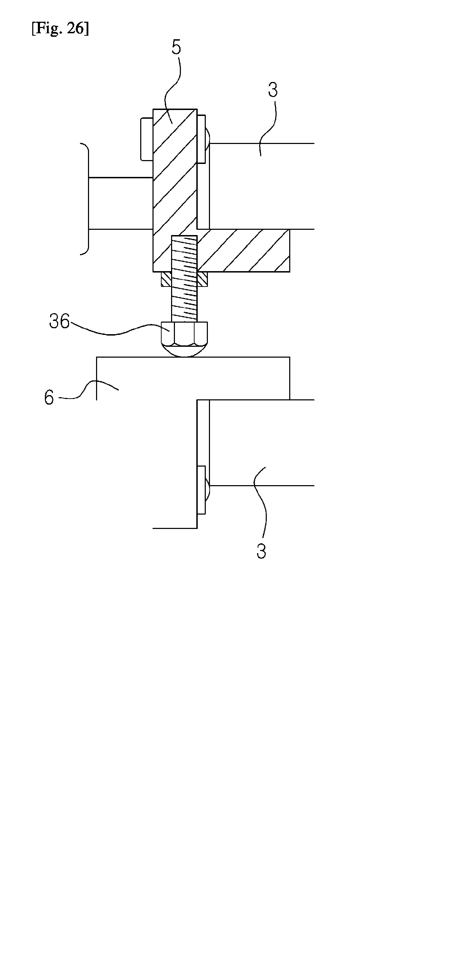

Fig. 26 is a view showing another embodiment of the distance adjustment means used in the dental model articulator according to the present invention. The distance adjustment means 19 may include a distance adjustment rod 36 that protrudes from the surface of the upper fastening means 5 that faces the lower fastening means 6 such that the distance adjustment rod 36 can make contact with the lower fastening means 6. The distance adjustment rod 36 is adjustable in length of a portion thereof protruding from the surface of the upper fastening means 5.

The distance adjustment rod 36 has an external thread that is threaded into the upper fastening means 5, whereby the position of a lowermost end of the distance adjustment rod 36 can be adjusted by threaded-rotation of the rod 36 so that the distance between the upper fastening means 5 and the lower fastening means 6 when they are closed to each other is controlled.

Therefore, the distance between the surfaces of the upper and lower fastening means 5 and 6 that face each other can minutely adjusted by the distance adjustment rod 36, whereby more precise simulation data can be obtained.

In the dental model articulator according to the present invention, with regard both to the fastening holes 8 formed in the proximal ends of the base members 3 and to the insert rods 9 provided on the upper fastening means 5 and the lower fastening means 6 and fitted into the respective fastening holes 8, the insert rods 9 are preferably disposed at positions at which, when the base members 3 are fastened to the upper and lower fastening means 5 and 6, the insert rods 9 are fitted into the surfaces of the base members 3 on which the dental models 2 are provided.

In other words, the base members 3 are fastened to the upper fastening means 5 and the lower fastening means 6 via the surfaces of the lower fastening means 5 and 6 on which the dental models 2 are disposed. Therefore, there is no need for precisely processing the other surfaces of the base members 3 on which no dental model is provided. Thus, the number of processes can be reduced, whereby the productivity can be enhanced, and the economic feasibility can thus be improved.

As described above, various movements of the dental models 2 can be embodied by the reciprocating means 16, the distance adjustment means 19, and the rotating means 25, whereby high-quality data can be obtained.

Although the embodiments of the present invention have been disclosed for illustrative purposes, those skilled in the art will appreciate that various modifications, additions and substitutions are possible, and the present invention is not limited to the above-described embodiments. Therefore, the bounds and scope of the present invention should be defined by the scope and spirit disclosed in the accompanying claims. Furthermore, the present invention should be construed as covering modifications, equivalents or alternatives falling within the scope and spirit of the present invention.

## Claims

1. A dental model articulator, comprising: a pair of base members configured such that dental models for upper and lower jaws are respectively fastened thereto; and an upper fastening means and a lower fastening means to which proximal ends of the respective base members are removably fastened, the upper fastening means and the lower fastening means being coupled to each other by a rotating shaft so as to be rotatable relative to each other,
wherein a fastening hole is formed through the proximal end of each of the base members,
an insert rod is provided on each of the upper fastening means and the lower fastening means, the insert rod being fitted into and fastened to the fastening hole formed in the proximal end of the corresponding base member, and
each of the upper fastening means and the lower fastening means comprises:
an auxiliary fastening means for pushing a surface of the proximal end of the corresponding base member so that pressure is applied to the base member toward the insert rod, thus increasing a base member fastening force.

2. The dental model articulator of claim 1, wherein the auxiliary fastening means comprises:
a pressing protrusion disposed perpendicular to the insert rod such that the pressing protrusion faces the surface of the proximal end of the base member, the pressing protrusion being elastically supported by a spring; and
a housing receiving the spring therein and guiding the pressing protrusion such that the pressing protrusion reciprocates back and forth.

3. The dental model articulator of claim 1, wherein the auxiliary fastening means comprises:
an elastic pressing member configured such that a portion thereof oriented in a direction perpendicular to the insert rod is disposed corresponding to the surface of the proximal end of the associated base member, the elastic pressing member elastically pressing the base member in the direction perpendicular to the insert rod.

4. A dental model articulator, comprising: a pair of base members configured such that dental models for upper and lower jaws are respectively fastened thereto; and an upper fastening means and a lower fastening means to which proximal ends of the respective base members are removably fastened, the upper fastening means and the lower fastening means being coupled to each other by a rotating shaft so as to be rotatable relative to each other,
wherein the upper fastening means comprises:
a fastening member to which the corresponding base member is fastened;
a rotating member to which an end of the fastening member is fastened, the rotating member being rotatably coupled to the lower fastening means by the rotating shaft; and
a reciprocating means provided between the fastening member and the rotating member, the reciprocating means supporting and guiding the fastening member such that the fastening member reciprocates toward and away from the rotating member.

5. The dental model articulator of claim 4, wherein the reciprocating means comprises:
a guide rod fastened to the end of the fastening member in a direction parallel to the base member; and
a guide hole formed in the rotating member and receiving the guide rod therein so that the guide rod is guided in the guide hole by the rotating member.

6. A dental model articulator, comprising: a pair of base members configured such that dental models for upper and lower jaws are respectively fastened thereto; and an upper fastening means and a lower fastening means to which proximal ends of the respective base members are removably fastened, the upper fastening means and the lower fastening means being coupled to each other by a rotating shaft so as to be rotatable relative to each other,
wherein the lower fastening means comprises
a distance adjustment means for adjusting a distance between the upper fastening means and the lower fastening means when the upper fastening means and the lower fastening means rotate relative to each other.

7. The dental model articulator of claim 6, wherein the distance adjustment means comprises:
a distance adjustment member protruding from a surface of the lower fastening means that faces the upper fastening means and provided so as to be rotatable, the distance adjustment member including contact surfaces facing the upper fastening means and arranged around a rotating center such that the contact surfaces are stepped to have different heights and each contact surface has a predetermined center angle on the rotating center; and
a spacing rod protruding from a surface of the upper fastening means that faces the lower fastening means, the spacing rod configured to make contact with the contact surfaces.

8. The dental model articulator of claim 6, wherein the distance adjustment means comprises:
a distance adjustment rod protruding from a surface of the upper fastening means that faces the lower fastening means such that the distance adjustment rod makes contact with the lower fastening means, the distance adjustment rod being adjustable in length of a portion thereof protruding from the surface of the upper fastening means.

9. The dental model articulator of claim 8, wherein the distance adjustment rod has an external thread that is threaded into the upper fastening means

10. The dental model articulator of claim 6, wherein the distance adjustment means comprises:
a rotor rotatably coupled to a surface of the lower fastening means that faces the upper fastening means, the rotor including, on a portion of an outer circumferential surface thereof, a plurality of contact parts having different radii (R) and (r) on a center axis of the rotor; and
a rotor-corresponding means provided in a portion of the upper fastening means that faces the lower fastening means at a position at which the rotor-corresponding means makes contact with the contact parts of the rotor, wherein when the upper fastening means is rotated around the rotating shaft, the rotor-corresponding means comes into contact with one of the contact parts so as to control the distance between the upper fastening means and the lower fastening means.

11. The dental model articulator of claim 10, wherein the contact part has a polygonal shape configured such that the contact parts are formed on the outer circumferential surface of the rotor and form a plurality of vertices spaced apart from the center axis of the rotor by different distances.

12. The dental model articulator of claim 10, wherein the rotor is a rod-shaped rotating body rotatably provided in a rotating shaft hole that is formed in the lower fastening means below the rotating shaft, the rotor having on a first end thereof a knob that can be manipulated by a user, and
a circular depression is formed in the rotor between the knob and the contact parts, wherein an end of a pin is inserted into the circular depression so that the rotor can be prevented from being undesirably removed from the rotating shaft hole.

13. The dental model articulator of claim 10, wherein the rotor-corresponding means includes a receiving depression formed in a portion of the upper fastening means that is disposed below the rotating shaft, the receiving depression being provided to receive any one of the contact parts therein.

14. A dental model articulator, comprising: a pair of base members configured such that dental models for upper and lower jaws are respectively fastened thereto; and an upper fastening means and a lower fastening means to which proximal ends of the respective base members are removably fastened, the upper fastening means and the lower fastening means being coupled to each other by a rotating shaft so as to be rotatable relative to each other,
wherein the lower fastening means comprises:
a lower body to which the corresponding base member is fastened; and
a rotating body rotatably coupled to the lower body by a shaft and rotatably coupled to the upper fastening means by the rotating shaft,
wherein a rotating means is provided between the lower body and the rotating body and controls the rotating body such that the rotating body rotates around an axis thereof in a lateral direction relative to the base member by a predetermined angle.

15. The dental model articulator of claim 14, wherein the rotating means comprises:
a pushing member engaging with a fastening shaft that is provided in the rotating body and is rotatably coupled to the lower body, the pushing member moving perpendicular to the fastening shaft and thus rotating the fastening shaft.

16. The dental model articulator of claim 14, wherein pinion gear teeth are formed around an outer circumferential surface of the fastening shaft and engage with a rack gear provided on the pushing member, and
the pushing member is guided in the lower body and provided so as to be returnable to an original position thereof.

17. A dental model articulator, comprising: a pair of base members configured such that dental models for upper and lower jaws are respectively fastened thereto; and an upper fastening means and a lower fastening means to which proximal ends of the respective base members are removably fastened, the upper fastening means and the lower fastening means being coupled to each other by a rotating shaft so as to be rotatable relative to each other,
wherein a fastening hole is formed through the proximal end of each of the base members,
an insert rod is provided on each of the upper fastening means and the lower fastening means, the insert rod being fitted into and fastened to the fastening hole formed in the proximal end of the corresponding base member, wherein the insert rod is disposed at a position at which, when the base member is fastened to a corresponding one of the upper fastening means and the lower fastening means, the insert rod is fitted into a surface of the base member on which the associated dental model is provided.
